# FASCICULE DE BREVET EUROPEEN

(11) **EP 2 009 827 B1**
(45) Date de publication et mention de la délivrance du brevet: **15.09.2010**
(21) Numéro de dépôt: 08305348.8
(22) Date de dépôt: 27.06.2008
(51) Int. Cl.: H04J 14/08, H04J 14/02, H04L 7/00

(54) **Dispositif de démultiplexage temporel optique**
Vorrichtung zum optischen Zeitdemultiplexen
Device for optical time demultiplexing

(30) Priorité: 29.06.2007 FR 0704720
(43) Date de publication de la demande: 31.12.2008
(73) Titulaire: Alcatel Lucent, 75008 Paris (FR)
(72) Inventeur: Zami, Thierry, 91300, MASSY (FR); Lorcy, Laurence, 77310, ST FARGEAU PONTHIERRY (FR)
(74) Mandataire: Shamsaei Far, Hassan

(56) Documents cités:
- US-A- 5 600 466
- US-A1- 2006 269 291

## Description

L'invention se rapporte au domaine des communications optiques, et en particulier aux systèmes de communication employant des techniques de multiplexage en longueur d'onde (WDM) et dans le temps (TDM).

Pour accroître le débit d'information transporté par un lien optique, on peut combiner des flux d'information par une technique de multiplexage en longueur d'onde (WDM) ou de multiplexage dans le temps (TDM). La technique WDM consiste à envoyer dans un même milieu de propagation plusieurs longueurs d'ondes porteuses, appelées canaux de longueur d'onde, qui portent des flux d'information respectifs. La technique TDM consiste à produire: un canal de longueur d'onde modulé à une haute cadence en intercalant dans le temps les bits de plusieurs flux d'information, appelés canaux temporels ou affluents, ayant une cadence plus faible. Parmi les techniques TDM, on distingue les techniques OTDM lorsque la modulation est générée de manière optique et ETDM lorsque la modulation est générée de manière électronique.

US 5600466 décrit un dispositif de multiplexage en longueur d'onde (WDM) et dans le temps (TTDM).

US-A-2006 0269291 décrit un démultiplexeur optique capable de séparer des canaux temporels périodiques entrelacés à l'aide d'une porte optique. Une seule longueur d'onde porte les canaux temporels.

Avec le déploiement de systèmes optiques dans différents types de réseaux de communication, par exemple réseaux de coeur, réseaux métropolitains et réseaux d'accès, il existe un besoin pour des dispositifs capables d'interconnecter des réseaux optiques ayant différentes exigences en termes de débit.

Pour cela, l'invention fournit un dispositif de démultiplexage optique, caractérisé par le fait qu'il comporte :
une section d'entrée pour recevoir un signal optique à multiplexage mixte en longueur d'onde et dans le temps, ledit signal optique incluant un premier canal de longueur d'onde portant une première pluralité de canaux temporels entrelacés dans le temps et un deuxième canal de longueur d'onde portant une deuxième pluralité de canaux temporels entrelacés dans le temps, les canaux temporels des première et deuxième pluralités présentant une cadence de répétition commune,
une porte optique pour sélectivement arrêter ou faire passer lesdits canaux de longueur d'onde vers une section de sortie dudit dispositif de démultiplexage optique, of des moyens de pilotage pour piloter ladite porte optique en synchronisation avec lesdits canaux temporels de manière à faire passer sélectivement vers ladite section de sortie au moins un canal temporel de ladite première pluralité et au moins un canal temporel de ladite deuxième pluralité de manière simultanée.

Selon d'autres modes de réalisation avantageux, le dispositif de démultiplexage optique peut présenter une ou plusieurs des caractéristiques suivantes :
- un récepteur optoélectronique couplé à la section d'entrée pour recevoir un canal de longueur d'onde portant un signal d'horloge ayant une fréquence égale à la cadence de répétition commune des canaux temporels ou à un multiple ou sous-multiple de cette cadence, lesdits moyens de pilotage comprenant un générateur de signal pour engendrer un signal de commande de la porte optique en fonction dudit signal d'horloge.
- un dispositif de séparation optique pour séparer le canal de longueur d'onde portant le signal d'horloge dudit signal optique à multiplexage mixte reçu dans la section d'entrée.
- au moins un retardateur optique réglable agencé pour appliquer un retard choisi à un desdits canaux de longueur d'onde, un tel élément pouvant servir à sélectionner un canal temporel à extraire et/ou à resynchroniser les canaux temporels portés par différentes longueurs d'onde.
- des moyens optiques de synchronisation pour synchroniser les première et deuxième pluralités de canaux temporels, notamment sous la forme de retardateurs optiques réglables.
- au moins une boucle de rétroaction pour piloter les moyens optiques de synchronisation en fonction du signal optique passé par ladite porte optique.
- un dispositif de récupération d'horloge à large bande pour effectuer une récupération d'horloge sur un des canaux de longueur d'onde portant une modulation TDM.

Avantageusement, ledit au moins un retardateur optique réglable est agencé entre un dispositif de séparation optique pour séparer lesdits premier et deuxième canaux de longueur d'onde et un dispositif de combinaison optique pour recombiner lesdits premier et deuxième canaux de longueur d'onde en direction de ladite porte optique.

Selon un mode de réalisation, la boucle de rétroaction comporte un récepteur optoélectronique agencé pour recevoir un signal optique passé par ladite porte optique et correspondant à un desdits canaux de longueur d'onde, ledit récepteur optoélectronique étant couplé à un circuit de commande pour régler un retardateur optique dédié audit canal de longueur d'onde.

La porte optique peut être réalisée avec de nombreuses techniques, par exemple du type qui présente un état passant en transmission ou en réflexion et qui est piloté par un signal de commande optique ou électrique.

Selon un mode de réalisation particulier, la section d'entrée est reliée à un premier sous-réseau optique à multiplexage en longueur d'onde présentant un premier débit de données et que ladite section de sortie est reliée à un deuxième sous-réseau optique à multiplexage en longueur d'onde présentant un deuxième débit de données inférieur audit premier débit de données.

L'invention fournit aussi un procédé de transport de signaux optiques comprenant les étapes consistant à :
engendrer un signal de données comportant au moins un canal de longueur d'onde portant une pluralité de canaux temporels entrelacés dans le temps,
engendrer un signal d'horloge sur un canal de longueur d'onde différent dudit signal de données, ledit signal d'horloge ayant une fréquence égale à une cadence de répétition desdits canaux temporels ou à un multiple ou sous-multiple de cette cadence,
transporter le signal de données et le signal d'horloge par multiplexage en longueur d'onde dans un milieu de propagation jusques au moins un dispositif de démultiplexage optique,
piloter ledit dispositif de démultiplexage à l'aide dudit signal d'horloge de manière à extraire sélectivement au moins un canal temporel dudit signal de données.

De préférence, le signal de données comporte aussi au moins un deuxième canal de longueur d'onde portant une deuxième pluralité de canaux temporels entrelacés dans le temps, ladite deuxième pluralité de canaux temporels ayant une cadence de répétition commune avec la première pluralité de canaux temporels, et l'on pilote ledit dispositif de démultiplexage à l'aide dudit signal d'horloge de manière à extraire sélectivement au moins un canal temporel des premier et deuxième canaux de longueur d'onde simultanément. Le dispositif de démultiplexage peut être du type défini précédemment.

Avantageusement, on transporte le signal d'horloge et ledit signal de données dans un support optique auquel est reliée une pluralité de dispositifs de démultiplexage pour piloter ladite pluralité de dispositifs de démultiplexage à l'aide du signal d'horloge.

L'invention fournit également un dispositif de transmission de signaux optiques qui comporte :
au moins un transmetteur optique à cadence haute pour engendrer au moins un signal optique à multiplexage dans le temps comprenant un canal de longueur d'onde portant une pluralité de canaux temporels entrelacés dans le temps,
un transmetteur optique à cadence basse pour engendrer un signal d'horloge comprenant un autre canal de longueur d'onde modulé à une fréquence égale à une cadence de répétition desdits canaux temporels ou à un multiple ou sous-multiple de cette cadence,
et un moyen de combinaison optique pour combiner ledit au moins un signal optique à multiplexage dans le temps et ledit signal d'horloge par multiplexage en longueur d'onde dans un milieu de propagation.

Selon un mode de réalisation préféré, le dispositif de transmission comporte une pluralité de transmetteurs optiques à cadence haute pour engendrer une pluralité de signaux optique à multiplexage dans le temps sur des canaux de longueur d'onde différents.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés. Sur ces dessins :
La figure 1 représente un mode de réalisation d'un signal optique à multiplexage mixte en longueur d'onde et dans le temps,
La figure 2 représente un autre mode de réalisation d'un signal optique à multiplexage mixte en longueur d'onde et dans le temps,
La figure 3 représente un mode de réalisation d'un réseau optique mettant en oeuvre le signal de la figure 1 ou 2,
La figure 4 est un chronogramme expliquant le fonctionnement d'un dispositif de démultiplexage selon un mode de réalisation de l'invention,
Les figures 5 à 7 et 9 à 12 représentent plusieurs modes de réalisation de dispositif de démultiplexage utilisables dans le réseau de la figure 3,
La figure 8 représente un autre mode de réalisation d'un réseau optique mettant en oeuvre un signal optique à multiplexage mixte en longueur d'onde et dans le temps.

Pour transporter des flux d'information à des débits très élevés et fortement modulaires, il est possible d'utiliser un ou plusieurs signaux TDM. Dans un signal TDM, les données sont distribuées dans plusieurs canaux temporels qui sont entrelacés dans le temps. La cadence de modulation des données est donc supérieure à la cadence de répétition des canaux temporels. Par exemple, pour un signal TDM comportant M canaux temporels, où M est un entier supérieur à 1, ayant une cadence de répétition f, la cadence de modulation des données est M*f. Le débit de données du signal TDM est égal à la somme des débits de ses canaux temporels.

On appelle signal optique à multiplexage mixte en longueur d'onde et dans le temps, ou de manière brève signal TDM-WDM, un ensemble de plusieurs signaux TDM transportés sur différents canaux de longueur d'onde et multiplexés en longueur d'onde sur un support de propagation commun. Le débit de données du signal TDM-WDM est égal à la somme des débits de ses canaux de longueur d'onde.

Dans la présente description, on considère des signaux TDM-WDM dans lesquels la cadence de répétition des canaux temporels est la même sur plusieurs canaux de longueur d'onde. Ceci permet de manipuler des canaux temporels de plusieurs canaux de longueur d'onde en une seule opération en restant dans le domaine optique, par exemple pour extraire ou commuter des canaux temporels d'un signal TDM-WDM. L'avantage des techniques tout-optiques sur les techniques électroniques pour réaliser de telles fonctions est une meilleure extensibilité vers les très hauts débits, une moindre dépendance entre débit et consommation de puissance, et potentiellement un moindre coût global, surtout à très haut débit.

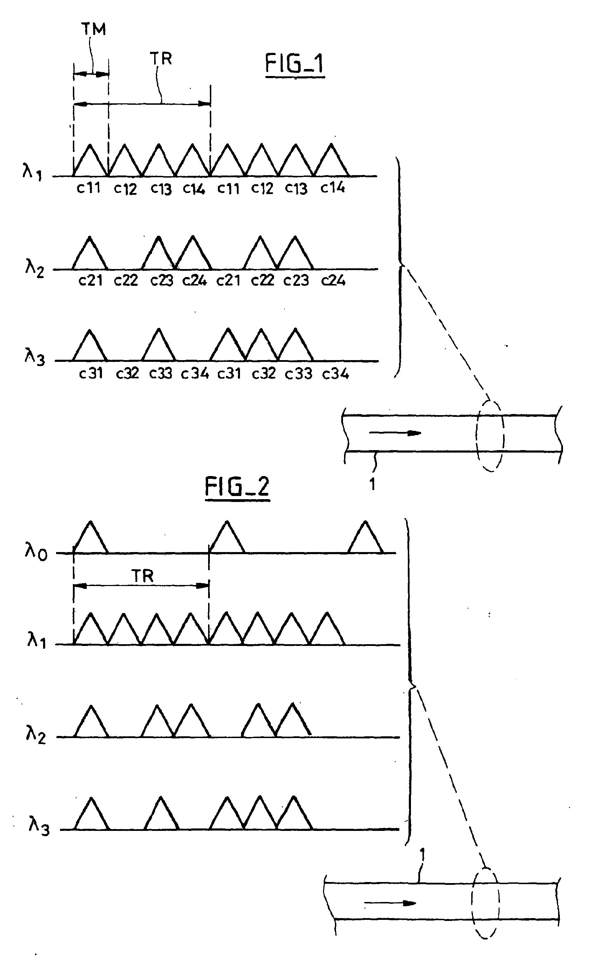

La figure 1 représente schématiquement un exemple de signal à multiplexage mixte TDM-WDM. Dans un milieu de propagation 1, par exemple une fibre optique, on a multiplexé des canaux de longueur d'onde λ1, λ2 et λ3 qui portent chacun un signal TDM respectif. Chaque signal TDM comporte ici quatre canaux temporels respectifs entrelacés dans le temps, à savoir C11, C12, C13 et C14 sur λ1, C21, C22, C23 et C24 sur λ2 et C31, C32, C33 et C34 sur λ3. La période de répétition des canaux temporels est la même sur les trois canaux de longueur d'onde. Cette période de répétition représentée par la flèche TR est donc égale à quatre fois la période de modulation des données sur un canal de longueur d'onde, représentée par la flèche TM.

Un signal TDM permet de transporter des données jusqu'à des débits très élevés, même au-delà des vitesses maximales atteignables par les circuits électroniques actuels. Par exemple, le débit d'un signal TDM sur la figure 1 peut être 10, 40 ou 100 Gbit/s, ce qui correspond respectivement à 2,5 , 10 ou 25 Gbit/s par canal temporel. Démoduler de manière électronique un signal TDM peut donc nécessiter des composants électroniques très rapides et coûteux, voire même être impossible.

Dans l'exemple représenté sur la figure 2, le signal à multiplexage mixte TDM-WDM est multiplexé avec un autre canal de longueur d'onde λ0 portant des impulsions d'horloge dont la fréquence est inférieure à la fréquence de modulation des données sur les canaux λ1, λ2 et λ3. La fréquence d'horloge apparaissant sur la figure est égale à la cadence de répétition des canaux temporels, mais elle pourrait aussi être égale à un multiple ou un sous-multiple de cette cadence de répétition. Le signal d'horloge optique transporté sur un canal de longueur d'onde multiplexé avec le signal TDM-WDM peut servir à piloter des dispositifs de sous-échantillonnage pour extraire des canaux temporels du signal TDM-WDM. Pour réaliser cette fonction, il est suffisant de disposer d'un signal d'horloge de fréquence égale à la cadence de répétition des canaux temporels, qui peut donc être nettement plus basse que la fréquence de modulation des données. Une récupération d'horloge à partir de ce signal peut donc être effectuée par une simple détection de signal avec des composants électroniques moins couteux que pour effectuer une véritable récupération d'horloge à partir d'un signal de données TDM comme λ1.

Les nombres de canaux de longueur d'onde et de canaux temporels apparaissant sur les figures et les débits correspondants sont donnés à titre purement illustratif et non limitatif. Les données ont été représentées dans un codage de type retour-à-zéro (RZ). Toutefois, d'autres types de codage peuvent aussi être utilisés. Sur les figures, les canaux temporels des différents canaux de longueur d'onde sont représentés comme synchrones. Bien qu'un tel synchronisme soit souhaitable, il se peut en pratique qu'il y ait des décalages temporels entre les canaux de longueur d'onde, par exemple du fait de la dispersion chromatique, notamment après une longue distance de propagation. Dons ce cas, il peut être utile de resynchroniser les canaux temporels avant de procéder à leur extraction, comme il sera expliqué plus bas.

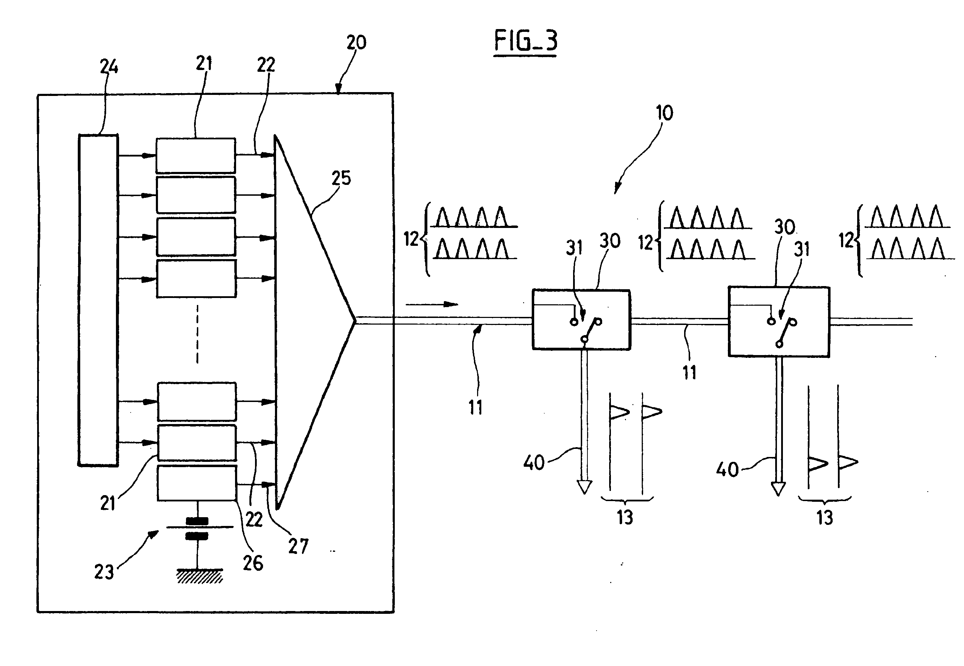

En référence à la figure 3, on décrit maintenant un réseau de transport de données optique 10 utilisant un signal TDM-WDM. Le réseau 10 comporte schématiquement un transmetteur TDM-WDM 20 et des noeuds démultiplexeurs 30 reliés au transmetteur 20 par un lien optique principal 11.

Le transmetteur TDM-WDM 20 comporte essentiellement un ou plusieurs transmetteurs TDM 21 qui reçoivent les données à transmettre depuis un module de stockage 24, comprenant par exemple une ou plusieurs mémoires, et qui génèrent chacun un signal TDM 22 sur un canal de longueur d'onde distinct. De préférence, les transmetteurs TDM 21 fonctionnent de manière synchrone pour que les canaux temporels modulés sur les différents canaux de longueur d'onde soient synchrones, ou du moins qu'ils aient entre eux des relations de phases fixes. Pour cela, une horloge commune 23 peut être employée. Six transmetteurs TDM 21 sont représentés à titre illustratif, mais ce nombre peut être quelconque. Un élément de combinaison optique 25, par exemple un multiplexeur de longueurs d'ondes ou un coupleur Nx1, combine les signaux TDM 22 pour les injecter sur le lien optique 11 par multiplexage spectral. Si on utilise aussi un signal d'horloge optique à plus basse cadence, il peut être produit par un transmetteur optique 26 également piloté par l'horloge commune 23 pour être synchronisé avec les canaux temporels des signaux 22. Pour cela, un diviseur de fréquence peut être prévu entre l'horloge commune 23 et le transmetteur optique 26. Le cas échéant, le signal d'horloge 27 est également injecté sur le lien optique 11 par l'élément de combinaison optique 25.

Le signal TDM-WDM résultant, représenté schématiquement au chiffre 12, peut transporter des données à un débit très élevé vers un ou plusieurs noeuds démultiplexeurs 30. En particulier, l'optique permet de réaliser facilement une distribution multipoint des données et, le cas échéant, du signal d'horloge 27. La fonction d'un noeud démultiplexeur 30 est d'extraire une partie du trafic du signal 12 pour la distribuer sur un lien optique secondaire 40 à plus bas débit. L'extraction peut être effectuée avec ou sans effacement des données extraites sur le lien principal 11. De préférence, l'extraction est effectuée dans le domaine optique. Un avantage du multiplexage mixte TDM-WDM est d'offrir une forte modularité du trafic pouvant être extrait. En effet, au niveau des noeuds démultiplexeurs 30, des techniques de démultiplexage temporel et de démultiplexage spectral peuvent être utilisées, éventuellement de manière combinée, pour extraire un ou plusieurs des canaux de longueur d'onde, ou bien un ou plusieurs canaux temporels portés sur un ou plusieurs des canaux de longueur d'onde.

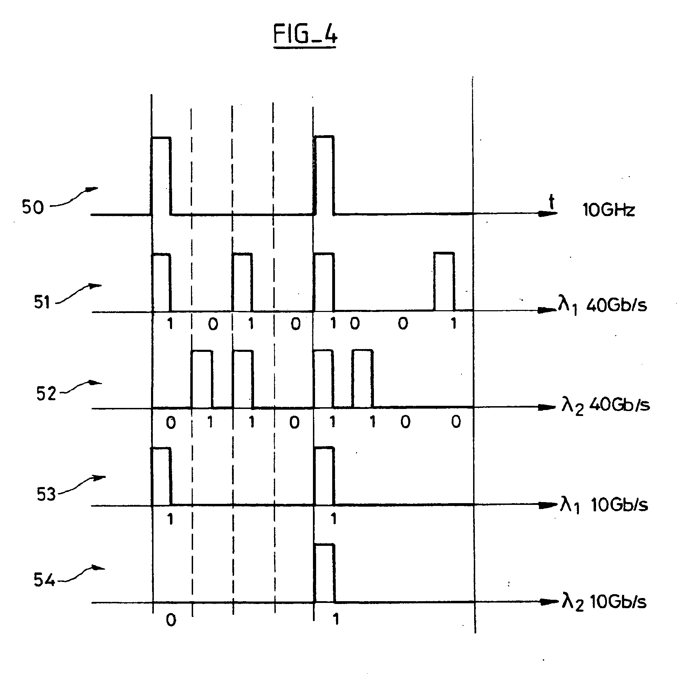

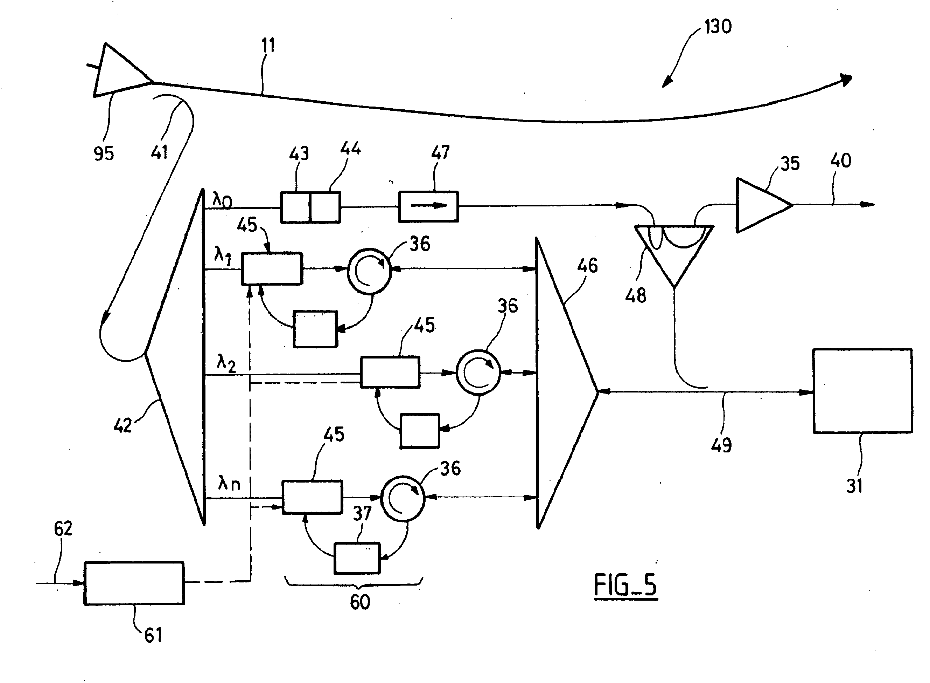

Selon un mode de réalisation, pour extraire simultanément des canaux temporels de plusieurs canaux de longueur d'onde multiplexés, le noeud démultiplexeur 30 comporte une porte optique 31 pilotée en synchronisation avec les canaux temporels à extraire. Le cas échéant, ce pilotage peut être effectué à partir du signal d'horloge 27. Le signal WDM résultant de cette extraction est représenté schématiquement au chiffre 13. Des canaux temporels identiques ou différents peuvent ainsi être extraits au niveau des différents noeuds démultiplexeurs 30. La figure 4 représente schématiquement le fonctionnement de ce mode de réalisation. Les conventions de la figure 1 sont réutilisées. La ligne 50 représente un signal de commande de la porte optique cadencé à la fréquence de répétition des canaux temporels. Ce signal peut être produit à partir du signal d'horloge 27 ou d'une autre manière, par exemple en divisant la fréquence d'un signal d'horloge récupéré directement sur l'un des signaux TDM. Les lignes 51 et 52 représentent les signaux TDM entrant sur les canaux λ1 et λ2. Les lignes 53 et 54 représentent les canaux λ1 et λ2 sortant sur le lien optique 40 et portant uniquement les canaux temporels extraits. Dans cet exemple, les canaux de longueur d'onde sortant sur le lien optique 40 portent donc des données modulées à une cadence égale au quart de la cadence de modulation des signaux TDM initiaux, puisqu'un canal temporel sur quatre a été extrait. Les données ont été représentées dans un codage de type retour-à-zéro (RZ). Toutefois, d'autres types de codage peuvent aussi être utilisés. Plusieurs technologies connues dans le domaine du démultiplexage TDM peuvent être utilisées pour réaliser la porte optique 31, par exemple un amplificateur laser à semi-conducteur dans un miroir boucle (SLALOM), un miroir boucle non linéaire optique (NOLM), un interféromètre non linéaire ultrarapide, un modulateur à électro-absorption (EAM), un modulateur à électro-absorption intégré de manière monolithique avec une photodiode . (PD-EAM), ou un absorbant saturable (SA). Les caractéristiques importantes de cette porte optique sont sa largeur de bande spectrale, qui doit être suffisante pour traiter plusieurs canaux de longueur d'onde simultanément, sa sensibilité à la polarisation, qui devrait être préférablement très faible, et sa vitesse de transition, qui doit être compatible avec la cadence de modulation des signaux TDM. Plusieurs implantations d'un noeud démultiplexeur de ce type vont maintenant être décrites en référence aux figures 5 à 7.

Sur la figure 5, les éléments identiques ou analogues à ceux de la figure 3 portent le même chiffre de référence. La porte optique 31 est ici du type sensible à un signal de commande optique et présentant un état passant en réflexion. Il s'agit par exemple d'un absorbant saturable. Plus de détails sur un tel composant peuvent être trouvés par exemple dans « Optical 2R regenerator based on passive saturable absorber at 40 Gbit/s for WDM long haut transmission », D. Rouvillain et al., IEEE Electronics Letters, vol. 38, No 19, pp 1113-1114. Une fraction de la puissance du signal TDM-WDM présent sur le lien principal 11 est prélevée par un coupleur 41. Ainsi, le trafic sur le lien principal 11 peut être extrait au niveau d'un noeud démultiplexeur tout en continuant son chemin vers d'autres noeuds démultiplexeurs. Le signal prélevé est envoyé à un dispositif de démultiplexage spectral 42, qui peut être fixe ou reconfigurable, par exemple un module de sélection de longueurs d'onde (WSS). Dans le noeud 130, le canal de longueur d'onde λ0 portant le signal d'horloge fait partie des canaux qui sont démultiplexés par le dispositif de démultiplexage spectral 42, car il est utilisé pour piloter la porte optique 31. Un récepteur optoélectronique 43 reçoit ce signal d'horloge. Une source laser 44 produit des impulsions de commande optiques à partir de ce signal d'horloge avec des caractéristiques adaptées au composant 31 en termes de longueur d'onde, forme et puissance. Les autres ports de sortie du dispositif de démultiplexage spectral 42 reçoivent un canal de longueur d'onde respectif portant un signal TDM. Ces canaux de longueur d'onde traversent des lignes à retard optiques réglables respectives 45 pour resynchroniser les canaux temporels sur les différents canaux de longueur d'onde. Un multiplexeur 46 recombine les canaux de longueur d'onde synchronisés pour les envoyer dans la porte optique 31. Lorsqu'elle est dans l'état bloquant, la porte optique 31 absorbe le signal provenant du multiplexeur 46. Lorsqu'elle est dans l'état passant, la porte optique 31 réfléchie le signal provenant du multiplexeur 46. L'état passant est obtenu en saturant l'absorbant avec une impulsion optique adaptée provenant de la source 44 à travers un isolateur 47, un multiplexeur de bandes 48 et un coupleur 49. Cette impulsion est produite à la cadence d'horloge détectée par le récepteur 43. Le coupleur 49 retourne le signal réfléchi, incluant à la fois la longueur d'onde de commande et les canaux de longueur d'onde portant les données démultiplexées, en partie vers le multiplexeur 46 et en partie vers le multiplexeur de bandes 48. Le multiplexeur de bandes 48 sépare la longueur d'onde de commande, qui sera piégée par l'isolateur 47, et les canaux de longueur d'onde portant les données, qui seront amplifiés par l'amplificateur 35 et transmis vers l'interface de sortie 40 du noeud. Le multiplexeur 46 absorbe la longueur d'onde de commande et passe les canaux de longueur d'onde portant les données démultiplexées vers les ports respectifs correspondants. Ces signaux réfléchis servent à alimenter des boucles de rétroaction 60 pour piloter les lignes à retard 45. Pour chaque canal de longueur d'onde traité, un circulateur 36 envoie le signal réfléchi sur un détecteur 37, par exemple une photodiode, qui mesure ainsi la puissance de l'impulsion réfléchie (donc démultiplexée) à la longueur d'onde correspondante. Cette puissance est un paramètre approprié pour optimiser le réglage de la ligne à retard 45 en recherchant toujours une puissance maximum. En effet, une baisse de cette puissance traduit le fait qu'un bit de données porté par ce canal de longueur d'onde a été partiellement tronqué par la porte optique, donc un manque de synchronisation entre le canal temporel correspondant à ce bit et le signal d'horloge pilotant la porte 31. Un circuit de commande non représenté, par exemple de type PLL, peut être prévu entre le détecteur 37 et la ligne à retard 45 pour effectuer cette optimisation.

La sélection du ou des canaux temporels devant être extraits sur un canal de longueur d'onde peut être effectuée à l'aide d'une configuration correspondante de la ligne à retard 45 associée. Des canaux temporels de rangs égaux ou différents peuvent donc être sélectionnés sur les différents canaux de longueur d'onde. Un contrôleur de noeud 61 peut être prévu pour effectuer cette configuration de manière dynamique en réponse à des instructions 62 reçues depuis un système de gestion, non représenté, ou un plan de contrôle du réseau, par exemple du type GMPLS. Un système de gestion de réseau peut être un équipement matériel, par exemple un micro-ordinateur, une station de travail, un appareil connecté à l'Internet ou tout autre dispositif de communication dédié ou à usage général. Des programmes logiciels exécutés par ce système remplissent des fonctions de gestion du réseau pour contrôler des éléments de réseau.

Les boucles de rétroaction 60 sont nécessaires pour autant qu'une désynchronisation des canaux temporels doivent être compensée, par exemple du fait de la dispersion chromatique et des variations de température dans le réseau, ou qu'une fonction de sélection des canaux temporels par canal de longueur d'onde soit souhaitée. Dans le cas contraire, les boucles de rétroaction 60 pourraient être supprimées, ainsi que les éléments 42, 45 et 46, puisqu'il ne serait alors pas indispensable de séparer les canaux de données.

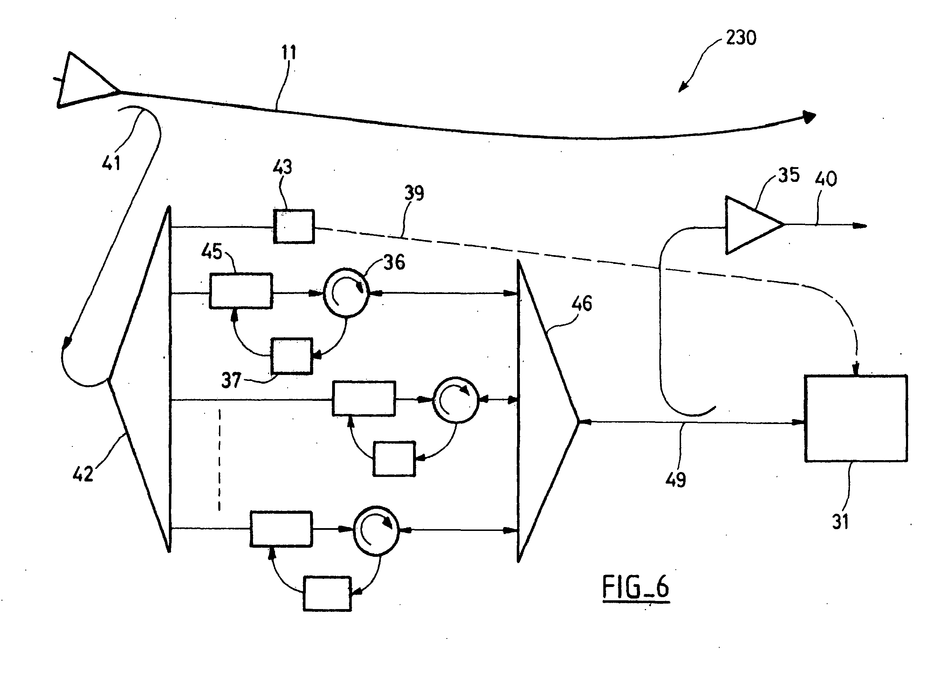

Le noeud démultiplexeur 230 de la figure 6 est similaire à celui de la figure 5, sauf la porte optique 35 qui est ici du type sensible à un signal de commande électrique. Comme indiqué par la flèche 39, ce signal de commande peut être produit directement à partir du signal de détection du récepteur 43 dans ce cas, ce qui simplifie l'architecture.

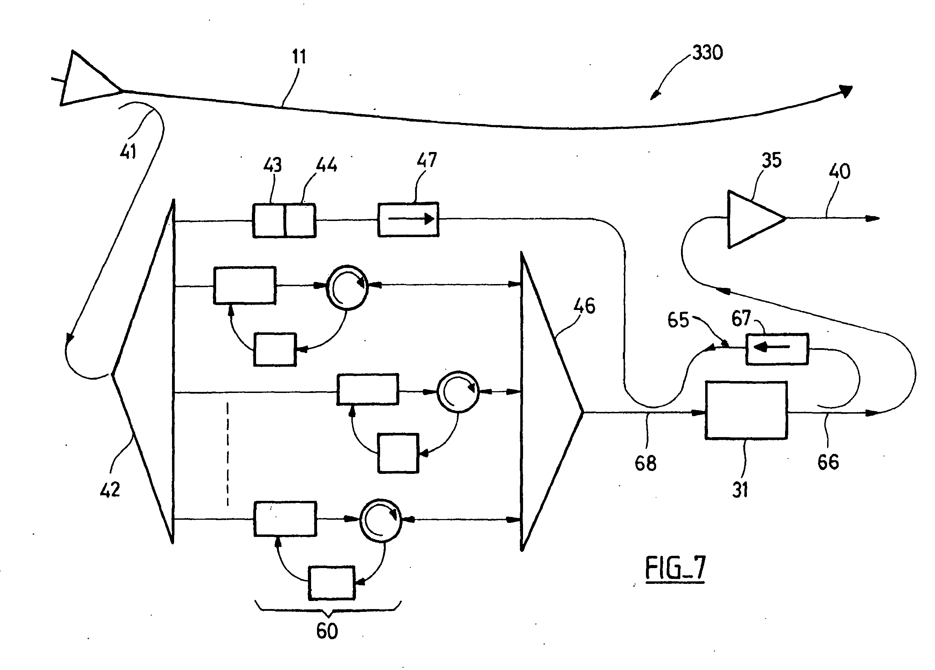

Dans le noeud démultiplexeur 330 de la figure 7, les éléments identiques ou analogues à ceux de la figure 5 portent le même chiffre de référence. La porte optique 31 est ici du type sensible à un signal de commande optique et présentant un état passant en transmission, par exemple un composant PD-EAM. Ici, l'état passant est obtenu en interrompant la puissance optique provenant de la source 44. Une ligne optique de recirculation 65 est formée avec un coupleur 66 agencé à la sortie de la porte optique 31, un isolateur optique 67 et un coupleur 68 agencé devant l'entrée de la porte optique 31. Cette ligne permet de rediriger une fraction de la puissance des signaux traversant la porte 31 vers le multiplexeur 46, pour effectuer une rétroaction sur les lignes à retard 45 de la même manière que précédemment. Ce mode de réalisation peut aussi être adapté pour une porte optique du type sensible à un signal de commande électrique, par analogie avec la figure 6.

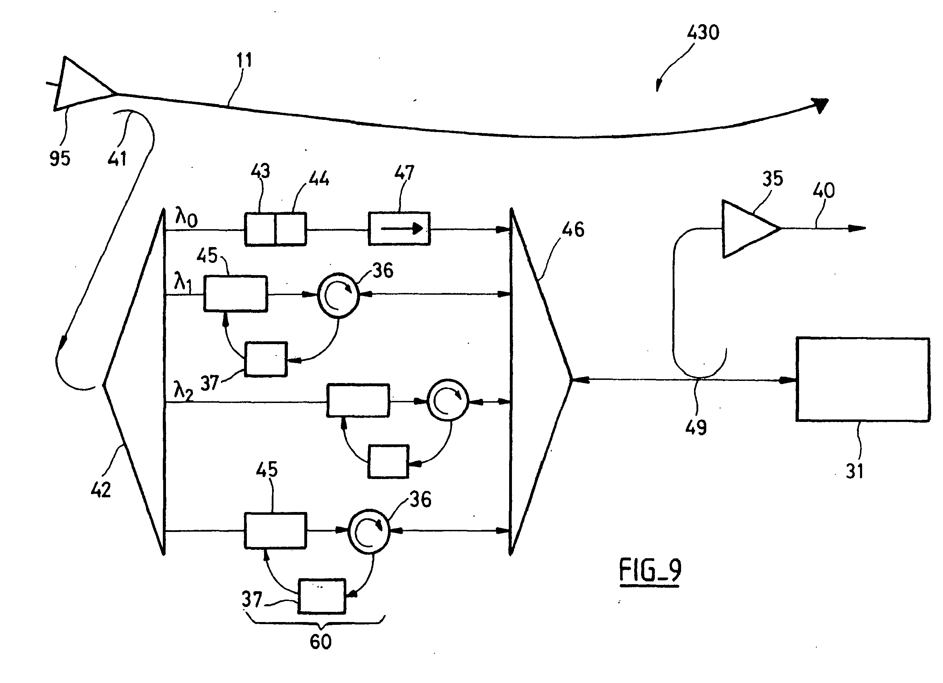

Dans le noeud démultiplexeur 430 de la figure 9, les éléments identiques ou analogues à ceux de la figure 5 portent le même chiffre de référence. Dans cette variante, le multiplexeur 46 comporte aussi un port pour recevoir le signal de commande optique depuis la source 44 et combiner ce signal avec les autres canaux de longueur d'onde en direction de la porte optique 31. Pour le reste, le fonctionnement est similaire au cas de la figure 5.

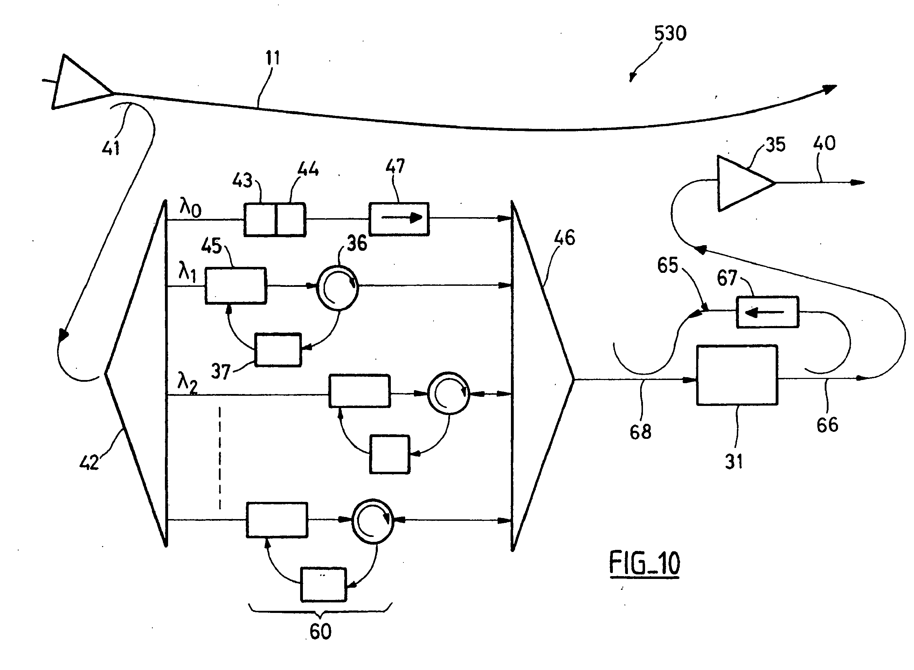

Dans le noeud démultiplexeur 530 de la figure 10, les éléments identiques ou analogues à ceux de la figure 7 portent le même chiffre de référence. Dans cette variante, le multiplexeur 46 comporte aussi un port pour recevoir le signal de commande optique depuis la source 44 et combiner ce signal avec les autres canaux de longueur d'onde en direction de la porte optique 31. Pour le reste, le fonctionnement est similaire au cas de la figure 7.

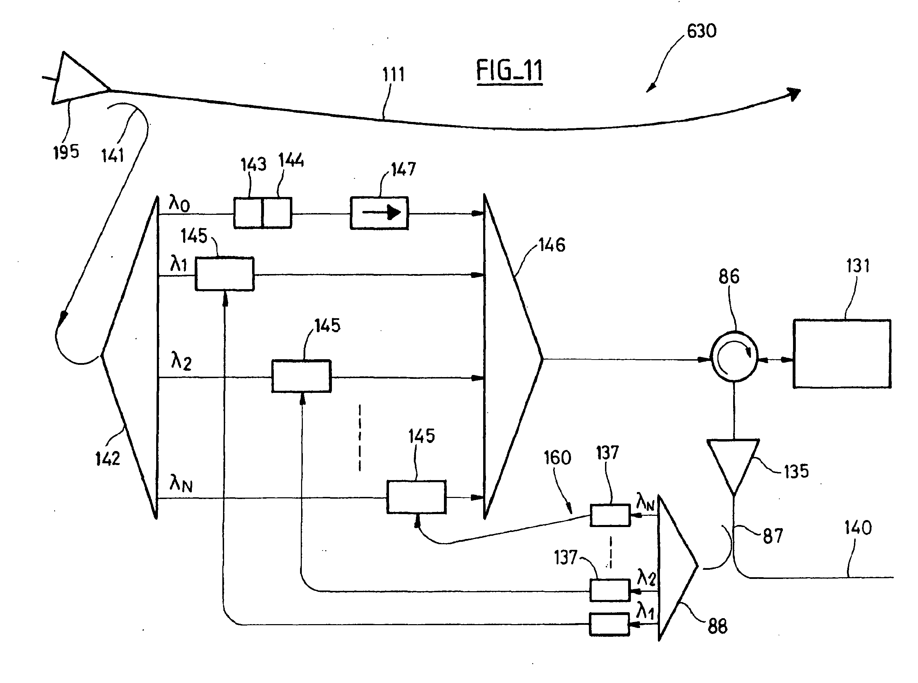

Dans le noeud démultiplexeur 630 de la figure 11, les éléments identiques ou analogues à ceux de la figure 9 portent le même chiffre de référence augmenté de 100. Dans cette variante, les signaux réfléchis par la porte optique 131 sont tous dirigés vers la ligne de sortie 140 par un circulateur 86 agencé entre le multiplexeur 146 et la porte optique 131. Ici, les signaux servant à alimenter les boucles de rétroaction 160 sont prélevés au niveau de la ligne de sortie 140 à l'aide d'un coupleur 87 qui alimente un démultiplexeur 88 pour séparer chaque canal de longueur d'onde. Le pilotage des lignes à retard 145 est effectué de la même manière que sur la figure 5 à partir des puissances détectées par les détecteurs 137, par exemple des photodiodes. Cette variante évite que les signaux de contre-réaction ne repassent par le même chemin que les signaux entrants. Cette variante utilise un démultiplexeur 88 supplémentaire mais fait l'économie des circulateurs initialement utilisés dans chaque voie entre les deux multiplexeurs optiques 42 et 46. Cette variante offre des pertes d'insertion globalement moins importantes car les signaux traversent moins de composants.

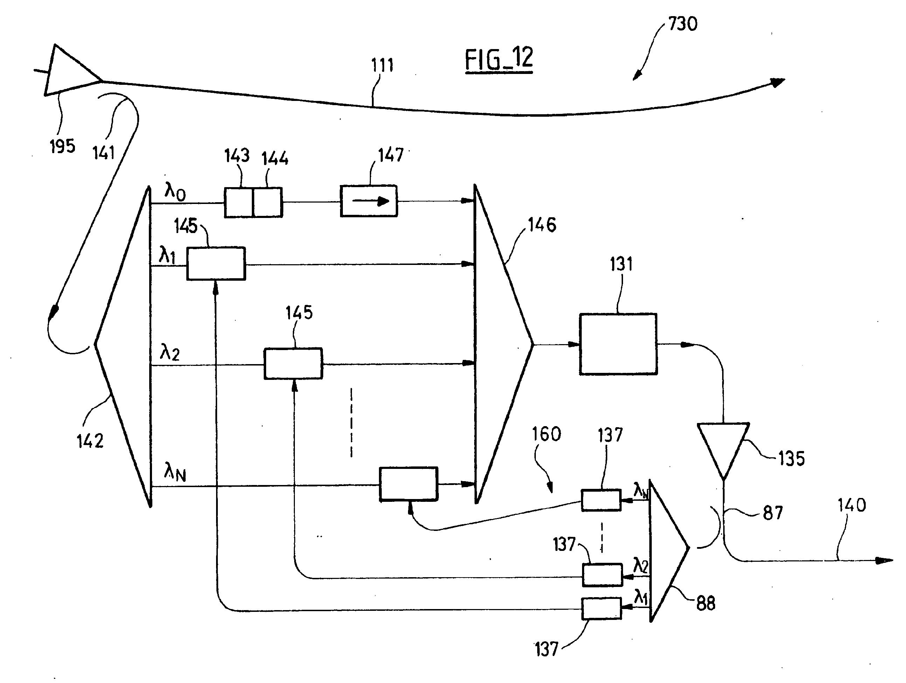

Dans le noeud démultiplexeur 730 de la figure 12, les éléments identiques ou analogues à ceux de la figure 11 portent le même chiffre de référence. Dans cette variante, la porte optique 131 est du type ayant un état passant en transmission. Le circulateur 86 est donc supprimé. Pour le reste, le fonctionnement est similaire au cas de la figure 11.

Les modes de réalisation des figures 11 et 12 peuvent aussi être adaptés pour une porte optique du type sensible à un signal de commande électrique, par analogie avec la figure 6. Les modes de réalisation des figures 11 et 12 peuvent aussi être adaptés au cas d'un signal de commande optique ayant un trajet externe au multiplexeur 146, par analogie avec les figures 5 et 7.

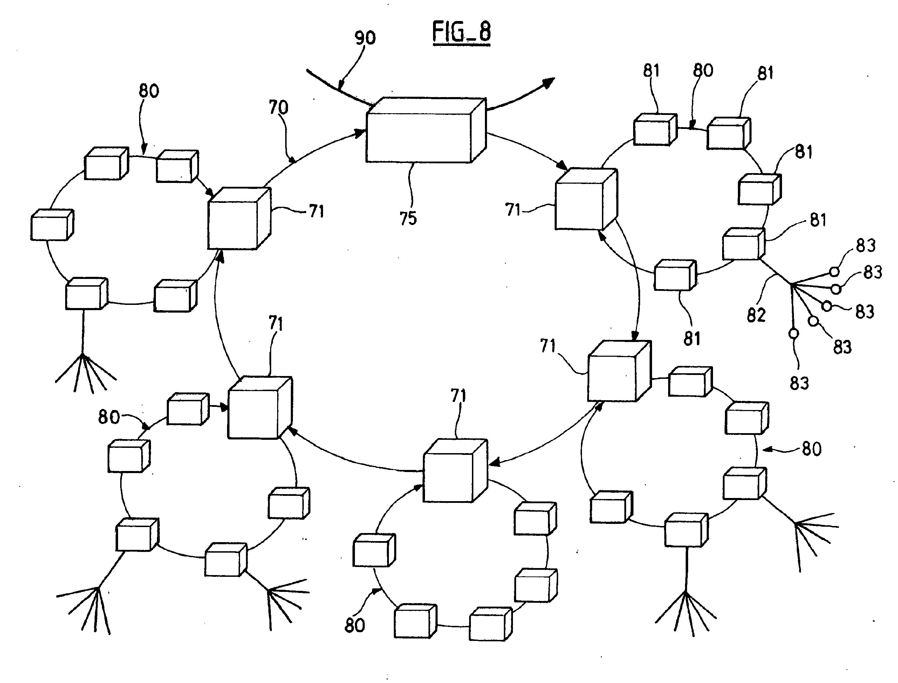

Les noeuds démultiplexeurs susmentionnés peuvent être utilisés pour interfacer deux réseaux optiques ayant des débits nominaux différents. Un exemple d'application de ce type est représenté sur la figure 8. Dans cet exemple, le signal TDM-WDM est utilisé dans un anneau principal 70, par exemple avec une taille régionale ou métropolitaine, qui dessert cinq noeuds démultiplexeurs 71 servant d'interfaces entre l'anneau principal et des anneaux secondaires 80, par exemple avec une taille métropolitaine ou inférieure. L'anneau principal 70 et les anneaux secondaires 80 sont tous des réseaux WDM, mais la cadence de modulation des données d'un canal de longueur d'onde est plus élevée dans l'anneau principal 70, par exemple 40 Gbit/s, que dans les anneaux secondaires 80, par exemple 10 Gbit/s. Un noeud démultiplexeur 71 réalise un démultiplexage temporel, ou sous-échantillonnage, des données portées par un ou plusieurs des canaux de longueur d'onde de l'anneau 70 pour distribuer ce ou ces canaux de longueur d'onde dans l'anneau secondaire 80 associé avec une modulation plus lente, c'est-à-dire avec seulement un ou plusieurs des canaux temporels initiaux. Aucune conversion de longueur d'onde n'est nécessaire au niveau du noeud 71. En variante, une conversion de longueur d'onde peut aussi être prévue. Un anneau secondaire 80 peut desservir une pluralité de terminaux de ligne optique (OLT) 81, par exemple jusqu'à huit terminaux, avec un nombre quelconque de canaux de longueur d'onde. Au niveau d'un terminal de ligne optique 81, un réseau optique passif (PON) 82 peut être utilisé pour distribuer le trafic aux utilisateurs finaux via des unités de réseau optiques (ONU) 83. Par exemple, selon un standard actuel, un terminal de ligne optique 81 peut utiliser 32 canaux de longueur d'onde descendants modulés à 2,5 Gbit/s, ce qui correspond à une capacité de 80 Gbit/s par terminal de ligne optique 81, et à un débit nominal de 640 Gbit/s dans l'anneau secondaire 80, et donc à un débit nominal de 3,2 Tbit/s dans l'anneau principal 70. Ces ordres de grandeur peuvent donc être atteints en utilisant par exemple 80 canaux de longueur d'onde dans la bande C modulés à 40 Gbit/s dans l'anneau principal 70 et 64 canaux à 10 Gbit/s dans les anneaux secondaires 80 pour transporter les données. Pour cela, un sous-échantillonnage d'un canal temporel sur quatre est réalisé par les noeuds démultiplexeurs 71. Un avantage d'une telle architecture est d'offrir une capacité de trafic descendant très élevée tout en utilisant des modulations relativement lentes dans les anneaux secondaires 80, ce qui permet de limiter les coûts d'équipement dans les anneaux secondaires 80 voire de réutiliser une infrastructure déjà installée avec des terminaux de ligne optique 81 conçus pour fonctionner à 10Gbit/s. Comme précédemment, un canal de longueur d'onde supplémentaire peut être utilisé dans l'anneau principal 70 pour distribuer un signal d'horloge à 10 GHz.

Dans l'anneau principal 70, une tête de réseau 75 réalise une interface avec un réseau de coeur 90. La tête de réseau 75 génère le signal TDM-WDM et le signal d'horloge de manière synchrone. Pour cela, elle peut comporter par exemple un transmetteur TDM-WDM similaire à celui de la figure 3. Ce signal d'horloge présente une fréquence qui correspond de préférence à la cadence à laquelle les noeuds démultiplexeurs 71 doivent sous-échantillonner les canaux, ou qui permet du moins d'obtenir cette cadence de manière simple. La tête de réseau 75 est aussi en charge d'affecter les flux de données à transférer, notamment les flux reçus depuis le réseau de coeur 90, à des canaux de longueur d'onde de l'anneau 70 et à des canaux temporels sur ces canaux de longueur d'onde. En fonction du volume d'un flux, celui-ci peut être affecté dans un ou plusieurs canaux temporels sur un ou plusieurs canaux de longueur d'onde. Pour cela, on peut utiliser des méthodes d'allocation de ressources connues par ailleurs, par exemple à l'aide d'un plan de contrôle GMPLS.

Bien que cela ne soit pas représenté sur la figure 8, il peut être nécessaire de prévoir des amplificateurs optiques en différents points du réseau en fonction des besoins et des distances de propagation. A titre d'exemple, la figure 5 montre un amplificateur 95 au niveau de l'entrée du noeud démultiplexeur 130. A titre indicatif, on peut fixer une consigne de puissance par canal de longueur d'onde égale à environ -30dBm au niveau de l'entrée de l'amplificateur 35.

En alternative ou en combinaison avec le récepteur prévu pour détecter le signal d'horloge sur un canal dédié, les noeuds démultiplexeurs décrits ci-dessus peuvent inclure un dispositif de récupération d'horloge plus rapide pour effectuer une réelle récupération d'horloge sur un canal de longueur d'onde portant une modulation TDM. On connaît des dispositifs de récupération d'horloge tout-optiques capables de produire un signal de récupération d'horloge dans le domaine optique et des dispositifs de récupération d'horloge optoélectroniques capables de produire un signal de récupération d'horloge dans le domaine électronique.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication. L'usage de l'article indéfini « un » ou « une » pour un élément ou une étape n'exclut pas, sauf mention contraire, la présence d'une pluralité de tels éléments ou étapes.

Dans les revendications, tout signe de référence entre parenthèses ne saurait être interprété comme une limitation de la revendication.

## Revendications

1. Dispositif de démultiplexage optique (30, 130, 230, 330, 430, 530, 630, 730, 71) comportant:
une section d'entrée (41) pour recevoir un signal optique à multiplexage mixte en longueur d'onde ou dans le temps, ledit signal optique incluant un premier canal de longueur d'onde (λ1) portant une première pluralité de canaux temporels périodiques (C11, C12, C13, C14) entrelacés dans temps et un deuxième canal de longueur d'onde (λ2) portant une deuxième pluralité de canaux temporels périodiques (C21, C22, C23, C24) entrelacés dans le temps, les canaux temporels des première et deuxième pluralités présentant une cadence de répétition commune,
**caractérisé en ce que** le dispositif comporte:
une porte optique (31,131),
un dispositif de séparation optique (42, 142) pour séparer lesdits premier et deuxième canaux de longueur d'onde,
un dispositif de combinaison optique (46, 146) pour recombiner lesdits premier et deuxième canaux de longueur d'onde en direction de ladite porte optique,
au moins un retardateur optique réglable (45,145) agencé entre ledit dispositif de séparation optique et ledit dispositif de combinaison optique pour appliquer un retard choisi à un desdits canaux de longueur d'onde,
ladite porte optique étant apte à sélectivement arrêter ou faire passer ensemble lesdits premier et deuxième canaux de longueur d'onde reçus du dispositif de combinaison optique vers une section de sortie optique dudit dispositif de démultiplexage optique,
et des moyens de pilotage (44, 144) pour piloter ladite porte optique en synchronisation avec lesdits canaux temporels de manière à faire passer sélectivement vers ladite section de sortie optique au moins un canal temporel de ladite première pluralité et au moins un canal temporel de ladite deuxième pluralité de manière simultanée.

2. Dispositif selon la revendication 1, **caractérisé par le fait qu'**il comporte un récepteur optoélectronique (43, 143) couplé à la section d'entrée pour recevoir un canal de longueur d'onde (λ0) portant un signal d'horloge ayant une fréquence égale à la cadence de répétition commune des canaux temporels ou à un multiple ou sous-multiple de cette cadence, lesdits moyens de pilotage comprenant un générateur de signal (44, 144) pour engendrer un signal de commande de la porte optique en fonction dudit signal d'horloge.

3. Dispositif selon la revendication 2, **caractérisé par le fait que** le dispositif de séparation optique (42, 142) est apte à séparer le canal de longueur d'onde portant le signal d'horloge dudit signal optique à multiplexage mixte reçu dans la section d'entrée.

4. Dispositif selon la revendication 1, **caractérisé par le fait que** ledit au moins un retardateur optique réglable est apte à être configuré de manière dynamique pour sélectionner un canal temporel à extraire dudit canal de longueur d'onde.

5. Dispositif selon la revendication 4, **caractérisé par le fait que** ledit ledit retardateur optique réglable est apte à être configuré de manière que ledit canal temporel de la première pluralité et ledit canal temporel de la deuxième pluralité passés de manière simultanée par ladite porte optique présentent des rangs égaux ou différents.

6. Dispositif selon la revendication 1, **caractérisé par le fait qu'**il comporte un contrôleur de noeud (61) pour effectuer la configuration dudit au moins un retardateur optique réglable en réponse à des instructions reçues (62).

7. Dispositif selon la revendication 1, **caractérisé par le fait qu'**il comporte des moyens optiques de synchronisation (45, 145) pour synchroniser les première et deuxième pluralités de canaux temporels.

8. Dispositif selon la revendication 7, **caractérisé par le fait qu'**il comporte au moins une boucle de rétroaction (60, 160) pour piloter les moyens optiques de synchronisation en fonction du signal optique passé par ladite porte optique.

9. Dispositif selon la revendication 8, **caractérisé par le fait que** ladite boucle de rétroaction comporte un récepteur optoélectronique (37, 137) agencé pour recevoir un signal optique passé par ladite porte optique et correspondant à un desdits canaux de longueur d'onde, ledit récepteur optoélectronique étant couplé à un circuit de commande pour régler un retardateur optique (45, 145) dédié audit canal de longueur d'onde.

10. Dispositif selon la revendication 1, **caractérisé par le fait que** ladite porte optique (31, 131) présente un état passant en transmission.

11. Dispositif selon la revendication 1, **caractérisé par le fait que** ladite porte optique (31, 131) présente un état passant en réflexion.

12. Dispositif selon la revendication 1, **caractérisé par le fait que** ladite section d'entrée est apte à être reliée à un premier sous-réseau optique à multiplexage en longueur d'onde (11, 70) présentant un premier débit de données et que ladite section de sortie est apte à être reliée à un deuxième sous-réseau optique à multiplexage en longueur d'onde (40, 80) présentant un deuxième débit de données inférieur audit premier débit de données.

13. Dispositif selon la revendication 1, **caractérisé par le fait qu'**il comporte un dispositif de récupération d'horloge à large bande pour effectuer une récupération d'horloge sur un des canaux de longueur d'onde portant une modulation TDM.

## Claims

1. Optical demultiplexing device (30, 130, 230, 330, 430, 530, 630, 730, 71) comprising:
an input section (41) for receiving a mixed wavelength division and time division multiplexing optical signal, said optical signal including a first wavelength channel (λ1) carrying a first plurality of periodic time channels (C11, C12, C13, C14) interleaved in time and a second wavelength channel (λ2) carrying a second plurality of periodic time channels (C21, C22, C23, C24) interleaved in time, the time channels of the first and second pluralities presenting a common repetition rate,
**characterized in that** the device comprises
an optical gate (31, 131),
an optical separation device (42, 142) for separating said first and second wavelength channels,
an optical combination device (46, 146) for recombining said first and second wavelength channels in the direction of said optical gate,
at least one adjustable optical retarder (45, 145) arranged between said optical separation device and said optical combination device to apply a chosen delay to one of said wavelength channels,
said optical gate being capable of selectively stopping or allowing to pass together said first and second wavelength channels received from the optical combination device towards an optical output section of said optical demultiplexing device,
and control means (44, 144) for controlling said optical gate in synchronization with said time channels so as to pass selectively towards said optical output section at least one time channel of said first plurality and at least one time channel of said second plurality simultaneously.

2. Device according to claim 1, **characterized by** the fact that it comprises an optoelectronic receiver (43, 143) coupled to the input section to receive a wavelength channel (λ0) carrying a timing signal with a frequency equal to the common repetition rate of the time channels or to a multiple or sub-multiple of this rate, said control means including a signal generator (44, 144) to produce a control signal for the optical gate based on said timing signal.

3. Device according to claim 2, **characterized by** the fact that the optical separation device (42, 142) is able to separate the wavelength channel carrying the timing signal from said mixed multiplexing optical signal received in the input section.

4. Device according to claim 1, **characterized by** the fact that said at least one adjustable optical retarder is suitable for dynamic configuration to select a time channel to be extracted from said wavelength channel.

5. Device according to claim 4, **characterized by** the fact that said adjustable optical retarder is suitable for configuration so that said time channel of the first plurality and said time channel of the second plurality passed simultaneously through said optical gate have equal or different ranks.

6. Device according to claim 1, **characterized by** the fact that it comprises a node controller (61) to configure said at least one adjustable optical retarder in response to instructions received (62).

7. Device according to claim 1, **characterized by** the fact that it comprises optical synchronization means (45, 145) to synchronize the first and second pluralities of time channels.

8. Device according to claim 7, **characterized by** the fact that it comprises at least one feedback loop (60, 160) to control the optical synchronization means based on the optical signal passed through said optical gate.

9. Device according to claim 8, **characterized by** the fact that said feedback loop comprises an optoelectronic receiver (37, 137) arranged to receive an optical signal passed through said optical gate and corresponding to one of said wavelength channels, said optoelectronic receiver being coupled to a control circuit to adjust an optical retarder (45, 145) dedicated to said wavelength channel.

10. Device according to claim 1, **characterized by** the fact that said optical gate (31, 131) presents an on-state in transmission.

11. Device according to claim 1, **characterized by** the fact that said optical gate (31, 131) presents an on-state in reflection.

12. Device according to claim 1, **characterized by** the fact that said input section is suitable for connection to a first wavelength division multiplexing optical subnet (11, 70) presenting a first data rate and that said output section is suitable for connection to a second wavelength division multiplexing optical subnet (40, 80) presenting a second data rate lower than said first data rate.

13. Device according to claim 1, **characterized by** the fact that it comprises a broadband clock recovery device to carry out clock recovery on one of the wavelength channels carrying TDM modulation.

## Patentansprüche

1. Optische Demultiplexeinrichtung (30, 130, 230, 330, 430, 530, 630, 730, 71) umfassend:
Einen Eingangsabschnitt (41) für den Empfang eines optischen Signals mit gemischtem Wellenlängen- und Zeitmultiplex, wobei das besagte optische Signal einen ersten Wellenlängenkanal (λ1), welcher eine erste Mehrzahl von periodischen Zeitkanälen (C11, C12, C13, C14), die zeitlich ineinander verschlungen sind, trägt, und einen zweiten Wellenlängenkanal (λ2), welcher eine zweite Mehrzahl von periodischen Zeitkanälen (C21, C22, C23, C24), die zeitlich ineinander verschlungen sind, trägt, enthält, wobei die Zeitkanäle der ersten und der zweiten Mehrzahl eine gemeinsame Wiederholungsrate haben,
**dadurch gekennzeichnet, dass** die Einrichtung umfasst:
Ein optisches Gate (31, 131),
eine optische Verzweigungseinrichtung (42, 142), um die besagten ersten und zweiten Wellenlängenkanäle zu trennen,
eine optische Kombinationseinrichtung (46, 146), um die besagten ersten und zweiten Wellenlängenkanäle in Richtung des besagten optischen Gates erneut zu kombinieren,
mindestens einen regelbaren optischen Verzögerer (45, 145), welcher zwischen der besagten optischen Verzweigungseinrichtung und der besagten optischen Kombinationseinrichtung angeordnet ist, um auf einem der besagten Wellenlängenkanäle eine gewählte Verzögerung anzuwenden,
wobei das besagte optische Gate dazu ausgelegt ist, die besagten von der optischen Kombinationseinrichtung empfangenen ersten und zweiten Wellenlängenkanäle selektiv abzustoppen oder gemeinsam durchzulassen und an einen optischen Ausgangsabschnitt der besagten optischen Demultiplexeinrichtung zu leiten,
und Steuermittel (44, 144), um das besagte optische Gate synchron mit den besagten Zeitkanälen zu steuern, so dass selektiv mindestens ein Zeitkanal der besagten ersten Mehrzahl und mindestens ein Zeitkanal der besagten zweiten Mehrzahl simultan durchgelassen und an den besagten optischen Ausgangsabschnitt geleitet werden.

2. Einrichtung nach Anspruch 1, **dadurch gekennzeichnet, dass** sie einen optoelektronischen Empfänger (43, 143) umfasst, welcher an den Eingangsabschnitt gekoppelt ist, um einen Wellenlängenkanal (λ0) zu empfangen, der ein Taktsignal trägt, dessen Frequenz gleich der gemeinsamen Wiederholungsrate der Zeitkanäle oder gleich einem Vielfachen oder einem Teilvielfachen dieser Rate ist, wobei die besagten Steuermittel einen Signalerzeuger (44, 144) umfassen, um ein Steuersignal des optischen Gates gemäß dem besagten Taktsignal zu erzeugen.

3. Einrichtung nach Anspruch 2, **dadurch gekennzeichnet, dass** die optische Verzweigungseinrichtung (42, 142) dazu ausgelegt ist, den Wellenlängenkanal, welcher das Taktsignal trägt, von dem besagten im Eingangsabschnitt empfangenen optischen Mischmultiplex-Signal zu trennen.

4. Einrichtung nach Anspruch 1, **dadurch gekennzeichnet, dass** der besagte mindestens eine regelbare optische Verzögerer dazu ausgelegt ist, dynamisch konfiguriert zu werden, um einen aus dem besagten Wellenlängenkanal zu extrahierenden Zeitkanal auszuwählen.

5. Einrichtung nach Anspruch 4, **dadurch gekennzeichnet, dass** der besagte regelbare optische Verzögerer dazu ausgelegt ist, derart konfiguriert zu werden, dass der besagte Zeitkanal der ersten Mehrzahl und der besagte Zeitkanal der zweiten Mehrzahl, welche simultan durch das besagte optische Gate gelassen wurden, gleiche oder verschiedene Ränge aufweisen.

6. Einrichtung nach Anspruch 1, **dadurch gekennzeichnet, dass** sie eine Knotensteuerung (61) umfasst, um in Antwort auf empfangene Befehle (62) die Konfiguration des besagten mindestens einen regelbaren optischen Verzögerers vorzunehmen.

7. Einrichtung nach Anspruch 1, **dadurch gekennzeichnet, dass** sie optische Synchronisationsmittel (45, 145) umfasst, um die erste und die zweite Mehrzahl von Zeitkanälen zu synchronisieren.

8. Einrichtung nach Anspruch 7, **dadurch gekennzeichnet, dass** sie mindestens eine Rückkopplungsschleife (60, 160) umfasst, um die optischen Synchronisationsmittel gemäß dem durch das besagte optische Gate gelassenen optischen Signal zu steuern.

9. Einrichtung nach Anspruch 8, **dadurch gekennzeichnet, dass** die besagte Rückkopplungsschleife einen optoelektrischen Empfänger (37, 137) umfasst, welcher dazu ausgelegt ist, ein durch das besagte optische Gate gelassenes und einem der besagten Wellenlängenkanäle entsprechendes optisches Signal zu empfangen, wobei der besagte optoelektrische Empfänger an eine Steuerschaltung gekoppelt ist, um den optischen Verzögerer (45, 145), welcher dem besagten Wellenlängenkanal zugeordnet ist, zu regeln.

10. Einrichtung nach Anspruch 1, **dadurch gekennzeichnet, dass** das besagte optische Gate (31, 131) im Übertragungsmodus einen Durchlasszustand aufweist.

11. Einrichtung nach Anspruch 1, **dadurch gekennzeichnet, dass** das besagte optische Gate (31, 131) im Reflexionsmodus einen Durchlasszustand aufweist.

12. Einrichtung nach Anspruch 1, **dadurch gekennzeichnet, dass** der besagte Eingangsabschnitt dazu ausgelegt ist, mit einem ersten optischen Wellenlängenmultiplex-Teilnetzwerk (11, 70), welches eine erste Datenrate aufweist, verbunden zu werden, und dass der besagte Ausgangsabschnitt dazu ausgelegt ist, mit einem zweiten optischen Wellenlängenmultiplex-Teilnetz (40, 80), welches eine zweite Datenrate aufweist, die niedriger ist als die besagte erste Datenrate, verbunden zu werden.

13. Einrichtung nach Anspruch 1, **dadurch gekennzeichnet, dass** sie eine Breitband-Taktrückgewinnungseinrichtung umfasst, um auf einem der Wellenlängenkanäle, welche eine TDM-Modulation tragen, eine Taktrückgewinnung auszuführen.
